# EUROPEAN PATENT APPLICATION

(11) **EP 3 826 359 A1**
(43) Date of publication of application: **26.05.2021**
(21) Application number: 19837874.7
(22) Date of filing: 16.07.2019
(51) Int. Cl.: H04W 36/00, H04W 8/08

(54) **RADIO ACCESS NETWORK INFORMATION PROCESSING METHOD AND DEVICE, NETWORK ELEMENT, AND STORAGE MEDIUM**

(30) Priority: 16.07.2018 CN 201810780159
(71) Applicant: ZTE Corporation, shenzhen Guangdong 518057 (CN)
(72) Inventor: HUANG, Qiang, Shenzhen, Guangdong 518057 (CN)
(74) Representative: Regimbeau
(86) International application number: PCT/CN2019/096175
(87) International publication number: WO 2020/015639

(57) **Abstract**

Disclosed herein are a radio access network (RAN) information processing method and device, a network element, and a storage medium. The RAN information processing method comprises: sending a first request to a core network, the first request carrying a user equipment (UE) identifier and an MEC platform UE context identifier, the UE identifier being used to trigger the core network to determine a UE network identifier of the UE; the MEC platform UE context identifier being used by the core network to send the MEC platform UE context identifier to an RAN; receiving a first response, which is based on the first request, sent by the core network; receiving a second request sent by the RAN, the second request comprising: an MEC platform UE context identifier and an RAN information UE context identifier; on the basis of the RAN information UE context identifier and the MEC platform UE context identifier, establishing an RAN information context channel of the UE; and sending a second response to the RAN.

## Description

The present application claims priority to a Chinese patent application filed with the Chinese Patent Office with an application No. 201810780159.8 on July 16, 2018, disclosure of which is incorporated herein by reference in its entirety.

### TECHNICAL FIELD

The present application relates to the field of communications technologies, but not limited to the field of communications technologies, and in particular, to a radio access network (RAN) information processing method and device, a network element, and a storage medium.

### BACKGROUND

A mobile edge computing (MEC) platform is introduced in the related art, and the MEC platform may provide an edge computing for a user equipment (UE) so as to improve the quality of a network service or communication service obtained by the UE.

However, in the related art, the MEC platform cannot successfully obtain a RAN information context of the UE, so that some edge computing services based on the RAN information context cannot be provided, which leads to a problem that the service provided by the MEC platform is poor and/or the user satisfaction is poor.

### SUMMARY

Embodiments of the present application provide a RAN information processing method and device, a network element, and a storage medium.

The technical scheme of the present application is achieved as follows.

In a first aspect, an embodiment of the present invention provides a RAN information processing method. The method is applied in a MEC platform and includes: a first request is sent to a core network, where the first request carries a user equipment (UE), identifier and an MEC platform UE context identifier, where the UE identifier is used for triggering the core network to determine a UE network identifier, and the MEC platform UE context identifier is used for the core network to send the MEC platform UE context identifier to a radio access network; a first response sent by the core network is received, where the first response is based on the first request; a second request sent by the radio access network is received, where the second request includes the MEC platform UE context identifier and a RAN information UE context identifier; a RAN information context channel of the UE is established based on the RAN information UE context identifier and the MEC platform UE context identifier; and a second response is sent to the radio access network. In a second aspect, an embodiment of the present invention provides a RAN information processing method. The method includes: a first request sent by a mobile edge computing (MEC) platform is received, where the first request includes a user equipment (UE) identifier and an MEC platform UE context identifier; a first response is sent to the MEC platform according to the first request; a sixth request is sent to a radio access network based on a UE network identifier determined according to the UE identifier, where the sixth request includes the UE network identifier and the MEC platform UE context identifier, and the sixth request is used for triggering the radio access network to determine a RAN information UE context identifier and establish a RAN information context channel; and a sixth response returned by the radio access network is received.

In a third aspect, an embodiment of the present invention provides a RAN information processing method. The method includes: a sixth request sent by a core network is received, where the sixth request includes a user equipment (UE) identifier and a mobile edge computing (MEC) platform UE context identifier; a sixth response is sent to the core network according to the sixth request; a second request is sent to an MEC platform according to a RAN information UE context identifier determined based on the sixth request, where the second request includes the MEC platform UE context identifier and the RAN information UE context identifier; and the second request is used for the MEC platform to establish a RAN information context channel of a UE; and a second response returned by the MEC platform according to the second request is received. In a fourth aspect, an embodiment of the present invention provides a RAN information processing device. The RAN information processing device is applied in a mobile edge computing (MEC) platform, and the RAN information processing device includes a first sending module, a first receiving module, a second receiving module, an establishing module and a second sending module. The first sending module is configured to send a first request to a core network, where the first request carries a user equipment (UE) identifier and an MEC platform UE context identifier, where the UE identifier is used for triggering the core network to determine a UE network identifier, and the UE network identifier is used for the core network to send the MEC platform UE context identifier to a radio access network. The first receiving module is configured to receive a first response sent by the core network, where the first response is based on the first request. The second receiving module is configured to receive a second request sent by the radio access network, and the second request includes the MEC platform UE context identifier and a RAN information UE context identifier. The establishing module is configured to establish a RAN information context channel of a UE based on the RAN information UE context identifier and the MEC platform UE context identifier. The second sending module is configured to send a second response to the radio access network.

In a fifth aspect, an embodiment of the present invention provides a RAN information processing device. The RAN information processing device includes a third receiving module, a third sending module, a fourth sending module and a fourth receiving module. The third receiving module is configured to receive a first request sent by a mobile edge computing (MEC) platform, where the first request includes a user equipment (UE) identifier and an MEC platform UE context identifier. The third sending module is configured to send a first response to the MEC platform according to the first request. The fourth sending module is configured to send a sixth request to a radio access network based on a UE network identifier determined according to the UE identifier, where the sixth request inlcudes the UE network identifier and the MEC platform UE context identifier, and the sixth request is used for triggering the radio access network to determine a RAN information UE context identifier and establish a RAN information context channel. The fourth receiving module is configured to receive a sixth response returned by the radio access network. In a sixth aspect, an embodiment of the present invention provides a RAN information processing device. The RAN information processing device includes a sixth receiving module, a sixth sending module, a seventh sending module and a seventh receiving module. The sixth receiving module is configured to receive a sixth request sent by a core network, where the sixth request includes a user equipment (UE) identifier and a mobile edge computing (MEC) platform UE context identifier. The sixth sending module is configured to send a sixth response to the core network according to the sixth request. The seventh sending module is configured to send a second request to a MEC platform according to a RAN information UE context identifier determined based on the sixth request, where the second request includes the MEC platform UE context identifier and the RAN information UE context identifier; and the second request is used for the MEC platform to establish a RAN information context channel of a UE. The seventh receiving module is configured to receive a second response returned by the MEC platform according to the second request.

In a seventh aspect, an embodiment of the present invention provides a network element. The network element includes a transceiver, a memory, and a processor. The processor is respectively connected to the transceiver and the memory, is configured to control information sending and receiving of the transceiver and information storage of the memory through execution of computer executable instructions, to implement the method provided by any one of the first aspect, the second aspect and the third aspect.

In an eighth aspect, an embodiment of the present invention provides a computer storage medium. The computer storage medium stores computer executable instructions. The computer executable instructions, when executed, implement the method provided by any one of the first aspect, the second aspect and the third aspect.

According to the embodiments of the present invention, the MEC platform informs, through the first request, the core network itself of the MEC platform UE context identifier and the UE identifier allocated for the UE; thus, the core network may firstly identify the UE according to the UE identifier and determine the UE network identifier for the UE; after the network identifier is determined, the MEC platform UE context identifier may be informed to the radio access network according to the UE network identifier, so that the radio access network performs information interaction with the MEC platform based on the MEC platform UE context identifier; therefore, establishment of a RAN information context channel between the MEC platform and the radio access network is completed, and moreover, the RAN information context of a same UE may be conveniently interacted between a subsequent MEC platform and the radio access network through the establishment of the RAN information context channel; whereby a problem that the RAN information context cannot be interacted due to a fact that identifiers, pointing to the same UE, between the MEC platform and the radio access network are different is solved. Therefore, the MEC platform conveniently interacts, through the RAN information context channel, the RAN information context of the same UE, with the radio access network, the edge computing service is better provided for the UE through acquisition of the RAN information context information, and the service quality of the edge computing service is improved.

### BRIEF DESCRIPTION OF DRAWINGS

FIG. 1 is a flowchart illustrating a first RAN information processing method provided by an embodiment of the present invention;
FIG. 2 is a flowchart illustrating a second RAN information processing method provided by an embodiment of the present invention;
FIG. 3 is a flowchart illustrating a third RAN information processing method provided by an embodiment of the present invention;
FIG. 4 is a flowchart illustrating a fourth RAN information processing method provided by an embodiment of the present invention;
FIG. 5 is a structural diagram of a first RAN information processing device provided by an embodiment of the present invention;
FIG. 6 is a structural diagram of a second RAN information processing device provided by an embodiment of the present invention;
FIG. 7 is a structural diagram of a third RAN information processing device provided by an embodiment of the present invention;
FIG. 8 is a diagram showing an architecture of a MEC system corresponding to a MEC platform provided by an embodiment of the present invention;
FIG. 9 is a diagram showing an architecture of a MEC system corresponding to another MEC platform provided by an embodiment of the present invention;
FIG. 10 is a diagram showing an architecture of a MEC system corresponding to yet another MEC platform provided by an embodiment of the present invention;
FIG. 11 is a flowchart illustrating a fifth RAN information processing method provided by an embodiment of the present invention;
FIG. 12 is a flowchart illustrating a sixth RAN information processing method provided by an embodiment of the present invention;
FIG. 13 is a flowchart illustrating a seventh RAN information processing method provided by an embodiment of the present invention;
FIG. 14 is a flowchart illustrating an eighth RAN information processing method provided by an embodiment of the present invention; and
FIG. 15 is a structural diagram of a network element provided by an embodiment of the present invention.

### DETAILED DESCRIPTION

The technical scheme of the present application is further elaborated in detail below in combination with the attached drawings and specific embodiments.

This embodiment provides a RAN information processing method, the method may be applied to a MEC platform, for example, the method may be run in a RAN interaction proxy service module. The RAN interaction proxy service module may be an independent module which is located in the MEC platform and is independent of a mobile edge (ME) host, and may also be a plug-in component or an application program of the mobile edge (ME) host of the MEC platform.

The MEC platform may include a platform of one or more ME hosts, and multiple ME hosts may be connected through various network connection manners. For example, the network connection manners may be a star connection, a ring connection and the like.

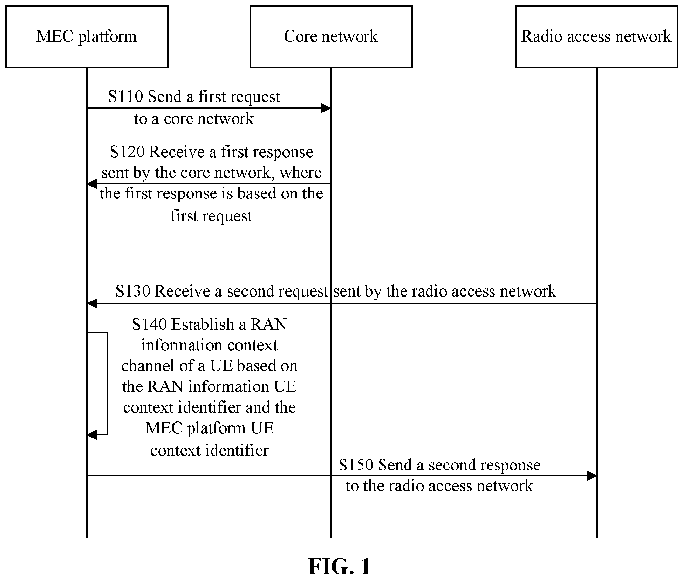

As shown in FIG. 1, the RAN information processing method may include described below.

In S110, a first request is sent to a core network, where the first request carries a UE identifier and a MEC platform UE context identifier, where the UE identifier is used for triggering the core network to determine a UE network identifier, and the MEC platform UE context identifier is used for the core network to send the MEC platform UE context identifier to a radio access network.

In step S120, a first response sent by the core network is received, where the first response is based on the first request.

In step S130, a second request sent by the radio access network is received, where the second request includes the MEC platform UE context identifier and a RAN information UE context identifier.

In step S140, a RAN information context channel of a UE is established based on the RAN information UE context identifier and the MEC platform UE context identifier.

In step S150, a second response is sent to the radio access network.

The MEC platform UE context identifier may be an identifier allocated to the UE by the MEC platform.

The MEC platform UE context identifier may be at least used in an establishment process of the RAN information context channel.

The MEC platform UE context identifier may be an identifier which is allocated by the MEC platform for the UE and is used for establishing the RAN information context channel. For example, the MEC platform UE context identifier may be a single identifier or a composite identifier. The single identifier is relative to the composite identifier, and the composite identifier may be used as an identifier in applications of multiple functions or processes at the same time. For example, when the UE registers in the MEC platform UE identifier to obtain the MEC platform UE identifier, the MEC platform UE context identifier may be an identifier that is applied when the UE requests an edge computation, and the MEC platform UE context identifier may also serve as an establishment identifier of the RAN information context channel. In summary, the MEC platform UE context identifier is a UE identifier that may be identified by the MEC platform itself, which is not limited to establishment of the RAN information context channel and/or interaction of the RAN information context. The MEC platform UE context identifier may be an identifier that the MEC platform allocates to the UE and that uniquely identifies the UE. In other embodiments, the MEC platform UE context identifier may also be used for performing the transmission of the RAN information context based on the MEC platform UE context identifier after the RAN information context channel is established.

The UE identifier may be an identifier allocated by a non-MEC platform and may be referred to as an external identifier of the MEC platform, for example, the UE identifier may include a communication identifier of the UE, and the communication identifier may be: a mobile subscriber number, such as a mobile phone number; an application identifier of an application used by the UE; etc. For another example, the communication identifier may be an apparatus identifier of the UE, such as an international mobile apparatus identifier.

For example, the UE identifier herein includes, but is not limited to, a mobile subscriber international ISDN/PSTN number (MSISDN), an international mobile equipment identity (IMEI), an internet protocol (IP) address of the UE, or the IP address and a port number of the UE.

The MEC platform UE context identifier identified within the MEC platform is allocated for the UE based on the UE identifier so as to facilitate the establishment of the RAN information context channel of the subsequent UE and further interact the RAN information context. The RAN information context here may be a static description of the RAN information change, and may be used for showing some status of the RAN information change, etc.

In some embodiments, the MEC platform UE context identifier may be an identifier allocated by the MEC platform based on the UE identifier.

In this embodiment, the RAN interaction proxy service module of the MEC platform, such as a RAN interaction proxy service module in the ME host, is used for receiving a third request sent by an application or a service in the MEC platform, the third request may carry RAN information of the UE, the RAN information may include at least the UE identifier.

The network may be divided into the radio access network and the core network.

The radio access network may be provided for the UE to access a network.

The core network is connected to the radio access network, for forwarding information between the radio access network, for example, for forwarding information received by one radio access network to another radio access network. Of course, the core network itself may also perform the information interaction according to the radio access network.

The radio access network is a network including an access network element and may be accessed to the network by the UE. The access network element included in the radio access network may include at least one of a base station or a centre unit (CU). The base station may include an independent base station for independent networking and a non-independent base station for non-independent networking. For example, a base station of the 5th generation mobile communication system (5G) may include a 5G base station for independent networking, or may include a non-independent base station jointly networked with the 4th generation mobile communication system (4G) or the 3rd generation mobile communication system (3G) and used by 5G and 3G or 5G and 4G, and this base station may include a next generation base station (gNodeB).

In some embodiments, the access network element is not limited to the next base station and/or CU, and may also be an evolved NodeB (eNB).

A core network element of the core network may include at least one of: a network exposure function (NEF), a policy control function (PCF), a unified data management (UDM), a network data analysis function (NWDAF), or a unified data repository (UDR).

In some embodiments, the core network element may also be other network elements, such as a session management function and/or an access management function (AMF).

Of course, this is merely an example of the core network element of the core network and is not limited to the above examples when implemented specifically.

In step S110, the step in which the first request is sent to the core network according to the UE identifier and the MEC platform UE context identifier may include: the first request is sent to at least one network element of the core network, for example, the first request is sent to the NEF or PCF.

In some embodiments, the first request carries both the UE identifier and the MEC platform UE context identifier. Thus, the core network may receive the UE identifier and the MEC platform context identifier allocated to the UE by the MEC platform. The core network may allocate the UE network identifier for the UE based on the UE identifier, and the core network may also query the UE network identifier allocated for the UE based on the UE.

The UE network identifier may be the UE identifier allocated by the core network for the UE, for example, the UE network identifier may include a temporary mobile subscriber identity (TMSI) allocated by the core network for the UE. The UE on a network side represents that it may be identified by the communication network, for example, it may be identified by each core network element in the core network, and may also be identified by the access network element in the radio access network.

In some embodiments, after the core network allocates the UE network identifier, the MEC platform UE context identifier and the UE network identifier may be transmitted to the radio access network, so that the radio access network may identify the UE based on the UE network identifier, and meanwhile, receive the MEC platform UE context identifier.

In other embodiments, the first request may carry an application identifier, this application identifier may be used for indicating the RAN information context channel currently requested to be established for transmission of the RAN information context corresponding to which application. This application identifier is used for indicating an application, and this application may be various software or programs for providing business services.

In other embodiments, after the core network determines the UE network identifier based on the

UE identifier and determines that a dedicated transmission channel between the core network and the radio access network has been established based on the UE network identifier, the core network may not need to inform the radio access network of the UE network identifier, and may send the MEC platform UE context identifier to the radio access network directly based on the dedicated transmission channel.

After the core network receives the first request and identifies the UE identifier and the MEC platform UE context identifier itself carried in the first request or corresponding information of the UE identifier and the MEC platform UE context identifier, the core network allocates the UE network identifier for the UE according to the UE identifier, and transmits the allocated UE network identifier and the MEC platform UE context identifier to the radio access network. Meanwhile, the core network returns the first response to the MEC platform according to the first request, so that the MEC platform may receive the first response.

The first response here may be a response indicating success or may be a response indicating failure.

There are a number of manners of indicating the failure, and several optional manners are provided below.

In manner one: the first response carries a failure instruction indicating the failure; the first response carries an error code indicating a failure reason, where this error code implicitly indicates the failure, and meanwhile clearly indicates the failure reason; and the first response simultaneously carries the failure instruction indicating the failure and the error code indicating the failure reason.

For example, the first response may indicate the failure when the core network fails to allocate the UE network identifier for the UE, and the first response may indicate the success if the core network successfully allocates the UE network identifier for the UE.

In some embodiments, since a certain UE is accessed to the network for the first time, but a user identifier module within the UE is not signed with a communication operator, even if the core network queries a signing database, the UE identifier still cannot be obtained, it may be determined that the UE is an illegal apparatus, the TMSI may be refused to be allocated to the UE, and thus allocation failure is caused, and at this time, the first response indicates the failure and indicates the failure reason.

In some embodiments, the MEC platform may re-initiate another first request when the first response indicates the failure, or the MEC platform re-initiates the first request according to the failure reason to get through the RAN information context channel of the UE after the problem caused by the failure reason is solved.

The core network may also synchronously send the UE identifier, the MEC platform context identifier and the UE network identifier to the radio access network.

The radio access network allocates the RAN information UE context identifier for the UE after the MEC platform context identifier is received, and the RAN information UE context identifier may be used by the radio access network in a process of establishment of the RAN information context channel and/or interaction of the RAN information context.

The radio access network sends the second request to the MEC platform, the second request carries the MEC platform UE context identifier and the RAN information UE context identifier, the MEC platform may conveniently identify the UE by carrying the MEC platform UE context identifier, and the MEC platform is informed by carrying the RAN information UE context identifier; and the radio access network allocates, for the UE, an identifier used in the process of establishment of the RAN information context channel and/or interaction of the RAN information context.

Therefore, interaction of different identifiers allocated to a same UE between the radio access network and the MEC platform is achieved.

If the MEC platform UE context identifier carried in the second request is successfully found in the MEC platform, then it may be considered that the identifiers respectively allocated by the radio access network and the MEC platform are interacted successfully, the MEC platform may return a second response indicating the success to the radio access network, otherwise, the MEC platform may return a second response indicating the failure.

There are a number of manners of indicating the failure, and several optional manners are provided below.

In manner one: the second response carries a failure instruction indicating the failure; the second response carries an error code indicating a failure reason, where this error code implicitly indicates the failure, and meanwhile clearly indicates the failure reason; and the second response simultaneously carries the failure instruction indicating the failure and the error code indicating the failure reason.

In still further embodiments, the second response may also carry the UE identifier, the MEC platform informs the radio access network of the UE identifier. If the core network has informed the radio access network of the UE identifier, then the second response does not need to carry the UE identifier. Of course, even if the core network does not inform the radio access network of the UE identifier of the UE, the MEC platform may not inform the radio access network of the UE identifier through the second response.

The step in which the RAN information context channel of the UE is established may include: the MEC platform UE context identifier and the RAN information UE context identifier are correspondingly stored; or the UE identifier, the MEC platform UE context identifier and the RAN information UE context identifier are correspondingly stored; or the UE identifier, the UE network identifier, the MEC platform UE context identifier and the RAN information UE context identifier are correspondingly stored. The UE network identifier here may be informed by the core network of the MEC platform through the first response.

The identifiers of the UE in different platforms or network segments are correspondingly stored, so that the identifiers pointing to the same UE may correspond to each other, the intercommunication of RAN contexts may be achieved, and thus the RAN information context channel is equivalently established.

In some embodiments, the first request also informs the core network of a platform identifier of the MEC platform, and the platform identifier of the MEC platform is forwarded to the radio access network by the core network, so that the radio access network may quickly address and send a destination address of the second request according to the platform identifier of the MEC platform.

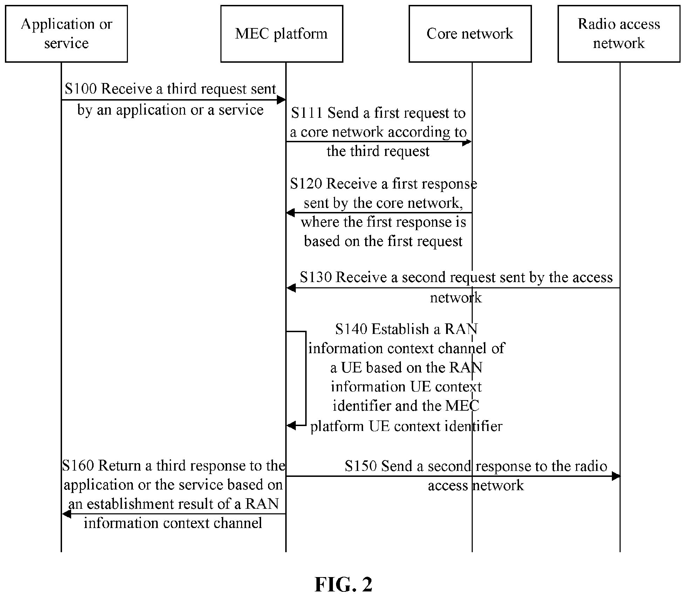

The method, as shown in FIG. 2, further includes described below.

In step S100, a third request sent by an application or a service is received, where the third request includes a UE identifier.

The step S110 may include a step S111 in which a first request is sent to a core network according to the third request.

In step S160, a third response is returned to the application or the service based on an establishment result of a RAN information context channel.

The application or the service herein may be an application or a service running in a MEC platform, or an application or a service running in a UE. Here, a RAN interaction proxy service module within the MEC platform may receive the third request from the application or the service based on a 1-interface.

The application may be an application program for providing one or more business services, and the service may be a certain business service in the application. In some embodiments, the application may correspond to a single application or client, while the service may be some plug-in in the application or a software development tool. Of course, here, this is merely an example of the application or the service, and there are numerous specific implementations, which is not limited to any one of the foregoing.

The MEC platform sends the first request to the core network after the third request is received. The third request carries the UE identifier, the UE identifier may be used for triggering the MEC platform to determine a MEC platform UE context identifier of the UE, for example, the MEC platform UE context identifier is allocated for the UE according to the UE identifier, or the MEC platform UE context identifier allocated for the UE is queried according to the UE identifier.

In some embodiments, the third request may be a request dedicated to requesting a RAN information opening registration, at which point the request may be referred to as a RAN information opening registration request.

In other embodiments, the third request may also be other request, such as a service request for an application or a service to request mobile edge computing with the MEC platform, which is not limited to the RAN information opening registration request described above.

If the third request is a RAN information opening registration request, then the third response may be a RAN information opening registration response, the third response is returned to the application or the service based on an establishment result of the RAN information context channel, and the third response may indicate success, indicate failure, or indicate failure and a failure reason. For example, the RAN information context channel is established successfully, the third response indicates the success, and if the RAN information context channel is established unsuccessfully, then the third response indicates the failure or indicates the failure and the failure reason.

For example, in some embodiments, if the first response indicates the failure, then a third response indicating the failure is sent to the application or the service.

For another example, if the MEC platform did not successfully receive a second request or a parameter error carried in the second request, the third response indicating the failure may likewise be sent to the application or the service.

The third request generally at least carries the UE identifier. For example, if the UE is a mobile phone, the UE identifier may be a mobile phone number or the like. The UE identifier is carried in the third request.

In some embodiments, after the third request is received, the first request is sent to the core network by the RAN interaction proxy service module in the MEC platform.

In other embodiments, if one UE is newly registered in one MCE platform, the MEC platform wants to know the RAN information context of the UE on the radio access network side, and may also automatically send, based on a built-in instruction of the MEC platform, the first request to the core network after the UE identifier or the MEC platform UE context identifier of the UE is obtained. The first request may be transmitted to the core network through an NEF or a PCF or an AMF, and then a radio access network is triggered by the AMF and the like of the core network to establish a RAN information context channel.

In some embodiments, the first request may also carry an opening parameter of RAN information, the opening parameter of the RAN information here is used for indicating a related parameter of the RAN information that a network side (such as core network and/or radio access network) is open to the MEC, which parameter may be used for defining a type of the opening RAN information, a degree of the RAN information, etc, or, the opening parameter of the RAN information here is used for indicating a content of the RAN information requested by the MEC platform, etc.

In other embodiments, the opening parameter of the RAN information may further include a time parameter indicating an opening time of the RAN information. For example, an access network element may be particularly busy during a particular period of time such as daytime, which may result in an overload phenomenon of the access network element if too many extranet apparatuses request the RAN information therefrom. Thus, in this embodiment, the opening parameter may further include a time parameter indicating a time period during which the RAN information is open, such as a time parameter indicating access to open the RAN information after 9: 00 pm. Of course, this is merely an example of the opening parameter, and is not limited to any one of the foregoing when implemented specifically.

Here, through the opening parameter of the RAN information, on one hand, a range of the RAN information that needs to be queried by the radio access network when the RAN information is opened is indicated, the query of the RAN information that does not need to be queried is excluded, and on the other hand, the unnecessary reception of the RAN information of the MEC platform may also be excluded, and the information interference is reduced.

The opening parameter of the RAN information includes a RAN information opening category. Here, the RAN information opening category indicates a category of the opening RAN information.

The RAN information may be various information describing a radio access network corresponding to the UE, such as various information of a base station to which the UE is accessed, an air interface to which the base station is accessed. For example, RAN information for a certain category is open to the MEC platform, but whether all RAN information for that category needs to be open to the MEC platform may be indicated by an openness parameter.

In some embodiments, the RAN information opening category includes at least one of a hierarchical category, an interface category, a cell opening category, a site category, and a service category.

The hierarchical category is used for indicating a network hierarchy corresponding to the opening RAN information.

The interface category is used for indicating an interface corresponding to the opening RAN information.

The cell category is used for indicating a cell type corresponding to the opening RAN information. The site category is used for indicating a site type corresponding to the opening RAN information. The service flow category is used for indicating a service flow type or a specific service flow corresponding to the opening RAN information.

The hierarchical category includes at least one of: a layer 3 category, a layer 2 category, or a layer 1 category.

In the Layer 3 category, the layer 3 here may be a media access control (MAC) layer; and the Layer 3 category may be a network layer category.

In the layer 2 category, the layer 2 here may be a radio link control (RLC) protocal layer.

In the layer 1 category, the layer 1 here may be a physical layer; and the Layer 1 category may be a physical layer category.

If the RAN information opening category is the layer 1 category, which indicates that the radio access network opens the RAN information of the physical layer of the UE to the MEC platform and the like.

The interface category may include at least one of a first interface category, a second interface category, or a third interface category.

The first interface is an interface between the radio access network and the core network, such as a next generation (NG) interface.

The second interface is an interface between different access network elements of the radio access network, such as an Xn interface.

The third interface is an interface between the radio access network and the UE, such as a Uu interface.

The cell category may be used for indicating a cell type for which the RAN information is opened. The cell type here relates to different radio network parameters. The radio network parameters may include a beam configuration parameter of the cell. For example, some cells have configured beams, some cells have no configured beams, and some cells have configured not only horizontal beams, but also vertical beams.

The cells may be divided into different types according to the radio network parameters of the cells, and this cell category indicates that the RAN information interacted between the MEC platform and the radio access network points to a corresponding cell type after the RAN information context channel is opened.

The site type is related to a site, which may be a radio access site, such as a base station, and the base station may be divided into an independent base station or a non-independent base station. In other embodiments, the site type may be divided according to coverage, such as the site may be divided into a macro base station or an indoor base station, as such, the site type may be used for indicating a site corresponding to the opening RAN information.

The service flow category is used for indicating a service flow type or a specific service flow corresponding to the opening RAN information, such as routing information of the service flow in the radio access network.

In some embodiments, the first request may further carry one or more of: a data network name (DNN) of the UE; the DNN of the UE may be a name of a data network through which service data of the UE passes; a single network slice selection assistance information (S-NSAI) of the UE; the network slice identifier here indicates a slice identifier of a network slice accessed or connected or used by the UE; a data network access identifier (DNAI) of the UE; an application identifier of an application used by the UE; the application here may be an application initiating the third request; and the MEC platform identifier of the MEC corresponding to the UE.

For example, the MEC platform identifier of the MEC corresponding to the UE may be a MEC platform identifier allocated for the UE according to the location of the UE, and may also be a MEC platform identifier of the MEC platform signed by a signing database of the UE. The MEC platform identifier is used for identifying the MEC platform.

In some embodiments, the method further includes: a fourth request sent by the application or the service is received; a fifth request is sent to the radio access network according to the fourth request and the RAN information UE context identifier, where the fifth request is used for the radio access network to open the RAN information for reconfiguration; a fifth response returned by the radio access network according to the fifth request is received; a fourth response is returned to the application or the service according to the fifth response.

The fourth request here may be made by the fourth request when the RAN information context channel has been established between the MEC platform and the radio access network, the opening parameter of the RAN information need to be remodified, etc.

The fourth request may be a RAN information opening reconfiguration request. The fourth response may be a RAN information opening reconfiguration response.

The fifth request may be various types of requests transmitted by the MEC platform to the radio access network, for example, the fifth request includes, but not limited to, a RAN information context reconfiguration request, and the RAN information context reconfiguration request may include an opening parameter to reconfigure the RAN to make the RAN open.

In other embodiments, the fifth request may further include an update request that the RAN information is open.

Reconfiguration of the RAN information being open in the radio access network may be achieved by means of sending of the fourth request. The fourth request may be sent according to an interactive RAN information UE context identifier between the MEC platform and the radio access network, and if the fourth request directly carries the RAN information UE context identifier, then the access network element may conveniently and rapidly determine that the RAN information of which UE is opened and reconfigured after receiving this request.

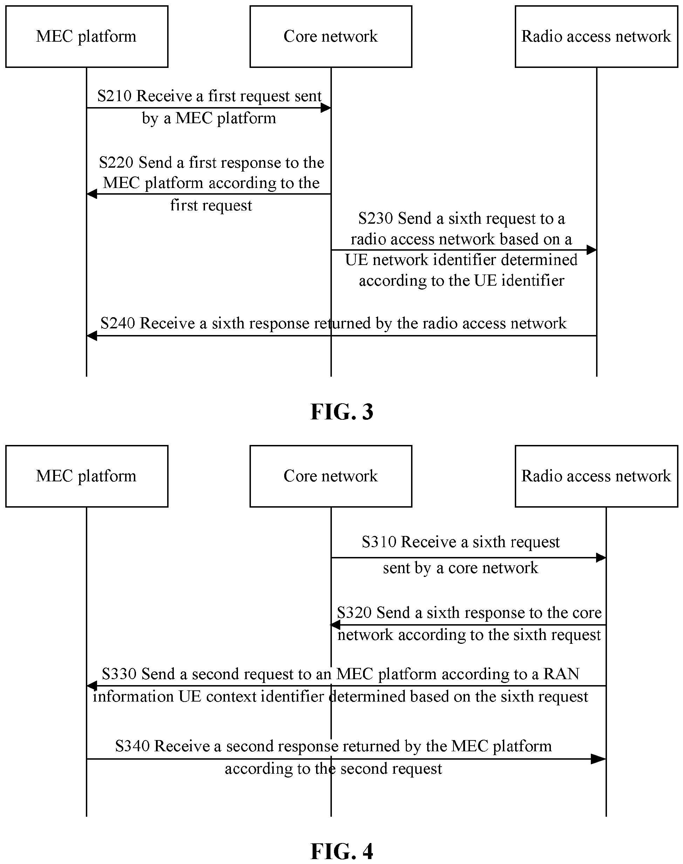

As shown in FIG. 3, this embodiment provides a RAN information processing method, the method includes described below.

In step S210, a first request sent by a MEC platform is received, where the first request includes a user equipment (UE) identifier and a MEC platform UE context identifier.

In step S220, a first response is sent to the MEC platform according to the first request.

In step S230, a sixth request is sent to a radio access network based on a UE network identifier determined according to the UE identifier, where the sixth request includes the UE network identifier and the MEC platform UE context identifier, and the sixth request is used for triggering the radio access network so as to determine a RAN information UE context identifier and establish a RAN information context channel.

In step S240, a sixth response returned by the radio access network is received.

The RAN information processing method provided by this embodiment may be a method applied in a core network, such as a method applied in an NEF or a PCF in the core network, or a method applied in a policy control rules function (PCRF) of the core network.

After the first request is received, the core network determines the UE network identifier of this UE, such as the aforementioned TMSI. For example, the UE network identifier is allocated for the UE according to the UE identifier, and for another example, the UE network identifier already allocated for the UE is queried.

In some embodiments, the step S220 issues the first response, a specific content of the first response is to confirm whether it is successful based on the UE network identifier. For example, if the UE network identifier is successfully allocated or queried, then a first response indicating the success is issued to the MEC platform, otherwise, a first response indicating failure is issued, or a first response carrying an error code (indicating a failure reason) is issued, or a first response simultaneously indicating both the failure and the failure reason is issued.

In the step S230, the sixth request is sent to the radio access network according to the UE network identifier. For example, the sixth request carrying the UE network identifier is sent, specifically, the sixth request is sent to an access network element of a radio access network to which the UE is connected, and the radio access network is triggered by the sixth request to establish the RAN information context channel with the MEC platform. The sixth request may carry a MEC platform identifier of the MEC platform corresponding to the UE so as to facilitate addressing when the radio access network sends the second request.

In some embodiments, the radio access network is further configured to return the sixth response to the core network according to the sixth request. Likewise, the sixth response may be a message indicating the success, or indicating the failure, or directly carrying the error code or the like and indicating the failure reason.

In some embodiments, the sixth response may include the RAN information UE context identifier allocated for the UE by the radio access network, so that recording of the identification used by the RAN information context channel by the core network is facilitated.

In some embodiments, the step S230 may include: a protocol data unit (PDU) session modification request is sent to the radio access network according to the UE network identifier; the step S240 may include: a PDU session modification response returned by the radio access network is received.

In the embodiments of the present invention, the sixth request may be the PDU session modification request, the sixth response may be the PDU session modification response, and the establishment of the RAN information context channel used by the RAN information opening of the radio access network is indicated through the PDU session modification request.

As shown in FIG. 4, the present embodiment provides a RAN information processing method, the method includes described below.

In step S310, a sixth request sent by a core network is received, where the sixth request includes a user equipment (UE) identifier and a mobile edge computing (MEC) platform UE context identifier.

In step S320, a sixth response is sent to the core network according to the sixth request.

In step S330, a second request to an MEC platform is sent according to a RAN information UE context identifier determined based on the sixth request, where the second request includes the MEC platform UE context identifier and the RAN information UE context identifier; and the second request is used for the MEC platform to establish a RAN information context channel of a UE.

In step S340, a second response returned by the MEC platform according to the second request is received.

The method in this embodiment may be a method applied in a radio access network, and an access network element for executing the method of the radio access network may be a gNB or a CU or the like.

After the sixth request is received, the access network element determines the RAN information UE context identifier based on the UE network identifier carried by the sixth request, and sends a corresponding second request to a corresponding MEC platform, for example, the access network element sends the second request to an independent RAN interaction proxy service module in the MEC platform or a RAN interaction proxy service module running in an ME host, in this way, the information interaction between the radio access network and the MEC platform is achieved, so that establishment of a channel through which the RAN information context of the UE is opened is achieved, and thus the interaction of subsequent RAN information is facilitated. For example, the second response may carry the MEC platform UE context identifier allocated for the UE by the MEC platform.

For example, in some embodiments, the sixth request further includes an opening parameter of RAN information; and/or the second response includes the opening parameter of the RAN information.

A related meaning of the opening parameter here may be found in the previous embodiments and is not repeated here.

In some embodiments, the method further includes: a fifth request sent by the MEC platform is received, where the fifth request carries the RAN information UE context identifier for the radio access network to open the RAN information for reconfiguration; and a fifth response is sent to the MEC platform according to the fifth request.

In some embodiments, if the RAN information context channel for one UE has been established, the opening of the RAN information may need to be reconfigured as services subscribed to by the UE are different or indicated by the user of the UE; at this time, the radio access network may directly receive a fifth request carrying the RAN information UE context identifier from the MEC platform, and subsequently sends a fifth response to the MEC platform according to the fifth request. Likewise, if the reconfiguration succeeds, then the fifth response may indicate success, and if the reconfiguration fails, then the fifth response may indicate failure, or indicate a failure reason, or simultaneously indicate both the failure and the failure reason.

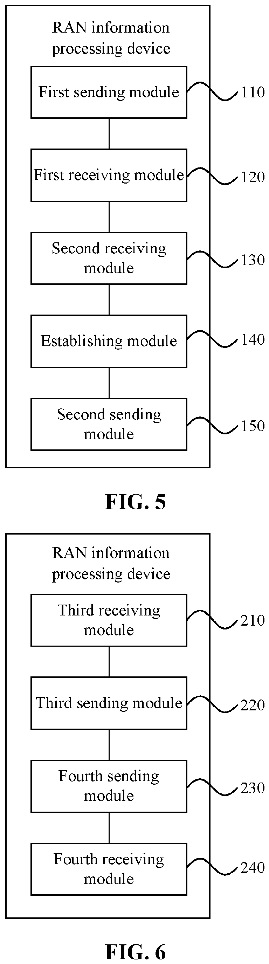

As shown in FIG. 5, this embodiment provides a RAN information processing device. The RAN information processing device is applied in a mobile edge computing (MEC) platform, and the RAN information processing device includes: a first sending module 110, the first sending module 110 is configured to send a first request to a core network, where the first request carries a user equipment (UE) identifier and an MEC platform UE context identifier, where the UE identifier is used for triggering the core network to determine a UE network identifier; and the UE network identifier is used for the core network to send the MEC platform UE context identifier to a radio access network; a first receiving module 120, the first receiving module 120 is configured to receive a first response sent by the core network, where the first response is based on the first request; a second receiving module 130, the second receiving module 130 is configured to receive a second request sent by the radio access network, and the second request includes the MEC platform UE context identifier and a RAN information UE context identifier; an establishing module 140, the establishing module 140 is configured to establish a RAN information context channel of a UE based on the RAN information UE context identifier and the MEC platform UE context identifier; and a second transmitting module 150, the second transmitting module 150 is configured to send a second response to the radio access network.

The RAN information processing device is applied in the MEC platform, may be a device independent of an ME host of the MEC platform, and may also be a device running in the ME host.

The first sending module 110, the first receiving module 120, the second receiving module 130, the establishing module 140 and the second sending module 150 may be program modules, and the functions of all modules may be achieved through execution of a processor. In other embodiments, the modules described above may be modules that incorporate hardware, such as programmable arrays of modules, which likewise may implement the functions of the various modules described above through execution of certain codes. In still further embodiments, the aforementioned modules may form, for an application specific integrated circuit, hardware modules having a specific function.

In conclusion, the aforementioned various modules may be software modules, software and hardware combined modules, or pure hardware modules, and are not limited to any one of the above examples.

In some embodiments, the device further includes a third request sending module and a third response receiving module. The third request sending module is configured to receive a third request sent by an application or a service, where the third request includes the UE identifier. The third response receiving module is configured to return a third response to the application or the service based on an establishment result of the RAN information context channel.

In some embodiments the third request further includes an opening parameter of RAN information.

In other embodiments the opening parameter of the RAN information includes a RAN information opening category.

In still further embodiments, the RAN information opening category includes at least one of a hierarchical category, an interface category, a cell category, a site category, or a service category. In some embodiments, the hierarchical category includes at least one of a Layer 3 category, a layer 2 category or a layer 1 category; and/or the interface category includes at least one of a first interface category, a second interface category or a third interface category. The first interface category is an interface between the radio access network and the core network. The second interface category is an interface between different access network elements of the radio access network. The third interface category is an interface between the radio access network and the UE.

In still further embodiments, the third request is a RAN information opening registration request; and the third response is a RAN information opening registration response.

In this embodiment, the RAN information opening registration request of the UE in the MEC platform is used for triggering the MEC platform to actively establish the RAN information context channel with the network side, so that the multiplexing of the signaling is achieved.

In other embodiments, the UE identifier includes at least one of: a mobile subscriber international (ISDN/PSTN) number (MSISDN); an international mobile equipment identity (IMEI); an internet protocol (IP) address of the UE; or the IP address and a port number of the UE.

In some embodiments, the first request is an application service request; and the second response is an application service request response.

In other embodiments, the device further includes a fourth request receiving module, a fifth request sending module, a fifth response receiving module and a fourth response sending module. The fourth request receiving module is configured to receive a fourth request sent by the application or the service. The fifth request sending module is configured to send a fifth request to the radio access network according to the fourth request and the RAN information UE context identifier, and the fifth request is used for the radio access network to open RAN information for reconfiguration. The fifth response receiving module is configured to receive a fifth response returned by the radio access network according to the fifth request. The fourth response sending module is configured to return a fourth response to the application or the service according to the fifth response.

In some embodiments, an access network element of the radio access network includes at least one of: a base station; a centralization unit (CU); and/or a core network element of the core network includes at least one of NEF, PCF, UDM, NWDAF or UDR.

In other embodiments, the method is applied in a RAN interaction proxy service module of the MEC platform.

As shown in FIG. 6, this embodiment provides a radio access network (RAN) information processing device. The RAN information processing device includes a third receiving module 210, a third sending module 220, a fourth sending module 230 and a fourth receiving module 240. The third receiving module 210 is configured to receive a first request sent by a mobile edge computing (MEC) platform, where the first request includes a user equipment (UE) identifier and an MEC platform UE context identifier. The third sending module 220 is configured to send a first response to the MEC platform according to the first request. The fourth sending module 230 is configured to send a sixth request to a radio access network based on a UE network identifier determined according to the UE identifier, where the sixth request includes the UE network identifier and the MEC platform UE context identifier, and the sixth request is used for triggering the radio access network to determine a RAN information UE context identifier and establish a RAN information context channel. The fourth receiving module is configured to receive a sixth response returned by the radio access network.

The RAN information processing device provided by the embodiments of the present invention may be a device running in the core network, such as, a device running in a UDM, NEF, or PCF. The third receiving module 210, the third sending module 220, the fourth sending module 230 and the fourth receiving module 240 may be program modules, software and hardware combined modules, or pure hardware modules.

In other embodiments, the fourth sending module 230 is specifically configured to send a protocol data unit (PDU) session modification request to the radio access network according to the UE network identifier.

The fourth receiving module 240 is specifically configured to receive a PDU session modification response returned by the radio access network.

In some embodiments, the first request further includes the MEC platform UE context identifier of a UE; and the sixth request further includes the MEC platform UE context identifier.

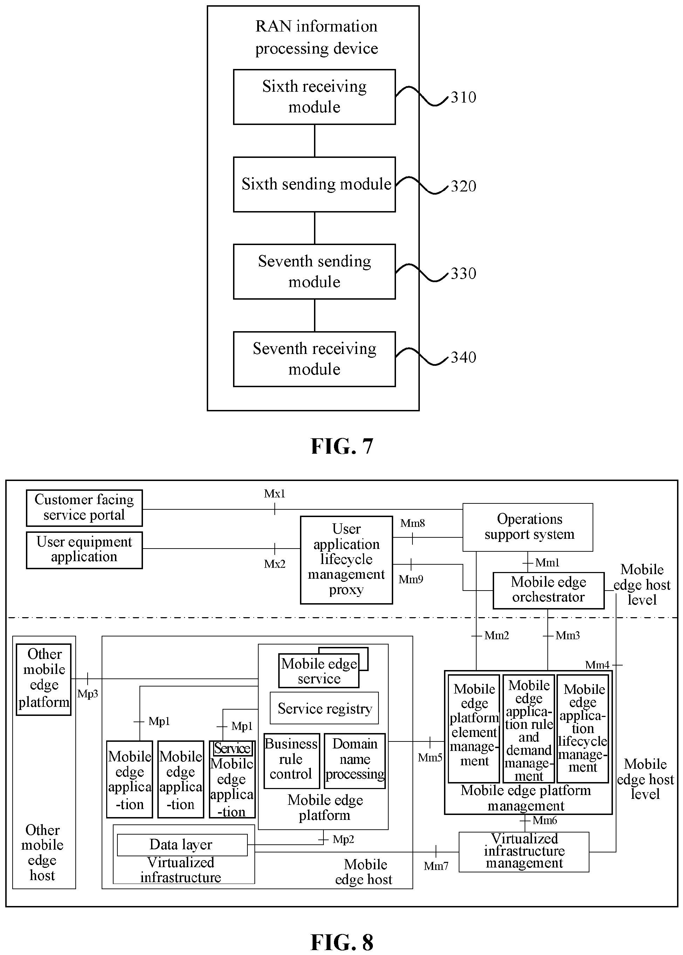

As shown in FIG. 7, this embodiment provides a radio access network (RAN) information processing device. The RAN information processing device includes a sixth receiving module 310, a sixth sending module 320, a seventh sending module 330 and a seventh receiving module 340. The sixth receiving module 310 is configured to receive a sixth request sent by a core network, where the sixth request includes a user equipment (UE) identifier and a mobile edge computing (MEC) platform UE context identifier. The sixth sending module 320 is configured to send a sixth response to the core network according to the sixth request. The seventh sending module 330 is configured to send a second request to a MEC platform according to a RAN information UE context identifier determined based on the sixth request, where the second request includes the MEC platform UE context identifier and the RAN information UE context identifier; and the second request is used for the MEC platform to establish a RAN information context channel of a UE. The seventh receiving module 340 is configured to receive a second response returned by the MEC platform according to the second request.

The RAN information processing device here may be a device applied to an access network element, such as, a device that may run in a base station or a CU.

The sixth receiving module 310, the sixth sending module 320, the seventh sending module 330 and the seventh receiving module 340 may be program modules, software and hardware combined modules, or pure hardware modules.

In some embodiments, the sixth request further includes an opening parameter of RAN information; and/or, the second response includes the opening parameter of the RAN information. In some embodiments, the device further includes a fifth request sending module and a fifth response sending module. The fifth request sending module is configured to receiving a fifth request sent by the MEC platform, where the fifth request carries the RAN information UE context identifier, and is used for the radio access network to open the RAN information for reconfiguration. The fifth response sending module is configured to send a fifth response to the MEC platform according to the fifth request.

Several specific examples are provided below in conjunction with any of the foregoing embodiments.

### Example 1

As shown in FIG. 8, this example provides an edge computing system. The edge computing system may be referred to simply as the European telecommunications standards institute (ETSI) MEC platform, and the edge computing system may include a mobile edge orchestrator, an operation support system, a User App LCM proxy, a CFS portal, a mobile edge manager, a virtualisation infrastructure manager, a mobile edge host, a mobile edge platform, a mobile edge application and a user equipment application.

The mobile edge orchestrator is responsible for selecting the mobile edge host, loading an application, and triggering the application's instance initialization and termination.

The operation support system is responsible for authorizing UE and third-party customer requests, and transferring them to the mobile edge orchestrator, and is responsible for operation and maintenance.

The user application lifecycle management proxy (User App LCM proxy) allows the UE to request operations such as loading and termination of instances, and informs the UE of the running status of corresponding application instances.

The customer facing service portal (CFS portal) allows third-party customers to select to subscribe to a set of mobile edge applications.

The mobile edge manager manages the life cycle of applications, manages application rules and requirements, and receives error reports and measurements from virtualisation infrastructure. The virtualisation infrastructure manager allocates, manages, and releases virtualized resources, collects and reports error information about the performance of virtualized resources.

The mobile edge host, i.e., this entity includes a mobile edge platform and a virtualized infrastructure on which the mobile edge applications are run.

The mobile edge platform collects necessary operating information of the mobile edge applications and provides mobile edge services.

The mobile edge application is an application instantiated on the mobile edge host based on the virtualized infrastructure.

The user equipment application performs information interaction through the user App LCM proxy and the mobile edge computing platform.

One of the core capabilities of an ETSI MEC platform is the opening of radio access network capabilities to provide three services for use by the application: a radio network information service, a location service, and a bandwidth management service, so that the application may optimize the application performance according to the radio access network status. In this example, ETSI MEC defines the application-oriented northbound interface followed by the southbound interface of these three services. The southbound interface may be an interface between the MEC platform and the RAN. This interface may be used for how the MEC platform establishes a UE-level RAN information context channel with the RAN.

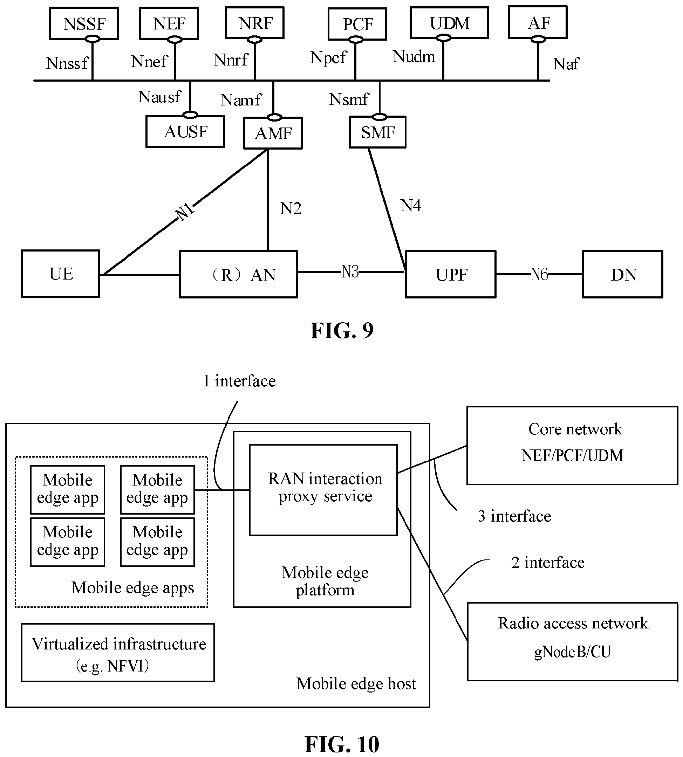

As shown in FIG. 9, the present example provides an edge computing system architecture. The edge computing system architecture includes: a terminal equipment (UE), a radio access network (RAN), a user plane function (UPF), a session management function (SMF), an access and mobility management function (AMF), an authentication server function (AUSF), a network slice selection function (NSSF), a network function repository function (NRF), a PCF, a UDM, a NEF and an application function (AF).The SMF is responsible for session access and management and includes UPF selection/reselection, and the AMF is responsible for UE access and mobility management. The AUSF is responsible for UE authentication, the NSSF is responsible for mesh slice selection, and the NRF is responsible for establishing network functions and discovering the network functions with each other. The PCF is a policy control function and is responsible for policy rules of a control surface, the UDM is used for unified data management and is responsible for information management such as user ID, and the NEF is a network opening function and is responsible for the core network's ability to open networks to the outside. The AF is responsible for application (App) control and deployment, may be operator trusted domain or third party untrusted domain. How the MEC platform establishes a RAN information context channel of a UE granularity level with the 5G RAN, since the MEC platform under 5G does not directly participate in UE-level service shunting, a UE identifier which may be acquired by the MEC platform is an external identifier outside a 5G network, such as an MSISDN, or a UE IP address after a network address is translated, and the external identifier may not be identified by a 5G RAN. The 5G RAN only has one RAN UE temporary identifier and may not be recognized by the RAN external network element. Even if there is a direct data transmission channel between the 5G RAN and the MEC, a UE-level context channel cannot be directly established.

The RAN, in combination with the MEC, provides wireless capability information openness to an application or a service, with the biggest problem being how the RAN and the MEC establish a context channel with respect to the UE. The MEC cannot identify the temporary identity of the RAN, while the UE external identifier that the application may acquire, such as the MSISDN, cannot be identified by the RAN. Thus, even if a routing connection has been established between the two, the UE-level RAN information context transmission cannot be established. This example addresses this problem by adding a RAN interaction proxy service module on an edge computing platform within an edge computing system, as shown in FIG. 10. The north direction of the service module is connected to the application or the service through a 1 interface, and the south direction of the service module is connected to a gNodeB or a central unit (CU) in the radio access network through a 2 interface, and is connected to a core network, i.e., NEF or PCF or UDM, through a 3 interface. The RAN interaction proxy service module acquires the UE identifier, an application identifier and a RAN information opening category by interacting with the application or the service. Then, the RAN interaction proxy service module sends the UE identifier, the MEC Host position, the MEC platform identifier, the application identifier, the RAN interaction proxy service module address information and the like to the core network, the core network triggers a corresponding process, such as a PDU session modification, and finally, the UE identifier and the application identifier are sent to the gNodeB or CU through the AMF. Then the gNodeB or the CU initiates a RAN information context establishment request to the RAN interaction proxy service module, so that a UE-level information interaction context channel among the RAN, the MEC and the application is opened.

The function of the RAN interaction proxy service module is described as follows.

The interface between the RAN interaction proxy service module and the application is the 1 interface.

The RAN interaction proxy service module receives a RAN information opening registration request sent by the application or the service through the 1 interface, a message content includes, but is not limited to, a UE identifier and a RAN information opening category. The UE identifier includes, but is not limited to, an MSISDN, a UE IP address and a port number. The RAN information opening category includes, but is not limited to, a layer3 category, a layer2 category, a layer 1 category, a NG interface category, a Xn interface category, a Uu interface category, a cell category, a site category and a service flow category. The RAN interaction proxy service module allocates an MEC platform UE context identifier for the UE according to the UE identifier provided by the application.

The RAN interaction proxy service module sends a RAN information opening registration response to the application or the service through the 1 interface, and a response content includes, but is not limited to, a success indication and/or a MEC platform UE context identifier.

The RAN interaction proxy service module sends the RAN information opening registration response to the application or the service through the 1 interface, and the response content includes, but is not limited to, a failure indication and/or an indication error code.

The RAN interaction proxy service module receives a RAN information opening reconfiguration sent by the application or the service through the 1 interface, and the message includes, but is not limited to, the MEC platform UE context identifier and the RAN information opening category. The RAN interaction proxy service module sends a RAN information opening reconfiguration response to the application or the service through the 1 interface, and the response content includes, but is not limited to, a success indication and/or the MEC platform UE context identifier. The RAN interaction proxy service module sends the RAN information opening reconfiguration response to the application or the service through the 1 interface, and the response content includes, but is not limited to, the failure indication and/or the MEC platform UE context identifier and/or the indication error code.

The RAN interaction proxy service module sends an application function request to the NEF or the PCFUDM through the 3 interface, a request message content includes, but is not limited to, the UE identifier; and/or a data network name; and/or a S-NSAI; and/or a data network access identifier; and/or an application identifier; and/or the MEC platform identifier; and/or the RAN interaction proxy service module IP address and port number; and/or the MEC platform UE context identifier. The UE identifier includes, but is not limited to, the MSISDN, the UE IP address and the port number

The RAN interaction proxy service module receives an application function request response sent by the NEF or the PCF or the UDM through the 2 interface, and the response content includes, but is not limited to, the success indication.

The RAN interaction proxy service module receives the Application Function request response sent by the NEF or the PCF or the UDM through the 3 interface, and the response content includes, but is not limited to, the failure indication and/or the failure error code.

The RAN interaction proxy service module receives the RAN information context establishment request sent by the gNodeB or the CU through the 2 interface. The message content includes, but is not limited to, the MEC platform UE context identifier and/or the UE identifier, and the UE identifier includes, but is not limited to, the MSISDN, the UE IP address and the port number; a gNodeB identifier; and/or a CU identification; and/or the RAN information UE context identifier corresponding to the UE.

The RAN interaction proxy service module sends a RAN information context establishment response to the gNodeB or the CU through the 2 interface. The response includes, but is not limited to, the success indication and/or the RAN information opening category.

The RAN interaction proxy service module sends the RAN information context establishment response to the gNodeB or the CU through the 2 interface. The response includes, but is not limited to, the failure indication and/or the error code.

The RAN interaction proxy service module sends a RAN information context reconfiguration to the gNodeB or the CU through the 2 interface. The message content includes, but is not limited to, the RAN information UE context identifier and the RAN information opening category.

The RAN interaction proxy service module receives a RAN information context reconfiguration response sent by the gNodeB or the CU through the 2 interface, and the response includes, but is not limited to, the success indication.

The RAN interaction proxy service module receives the RAN information context reconfiguration response sent by the gNodeB or the CU through the 2 interface, and the response includes, but is not limited to, the failure indication and/or the error code.

### Example 2

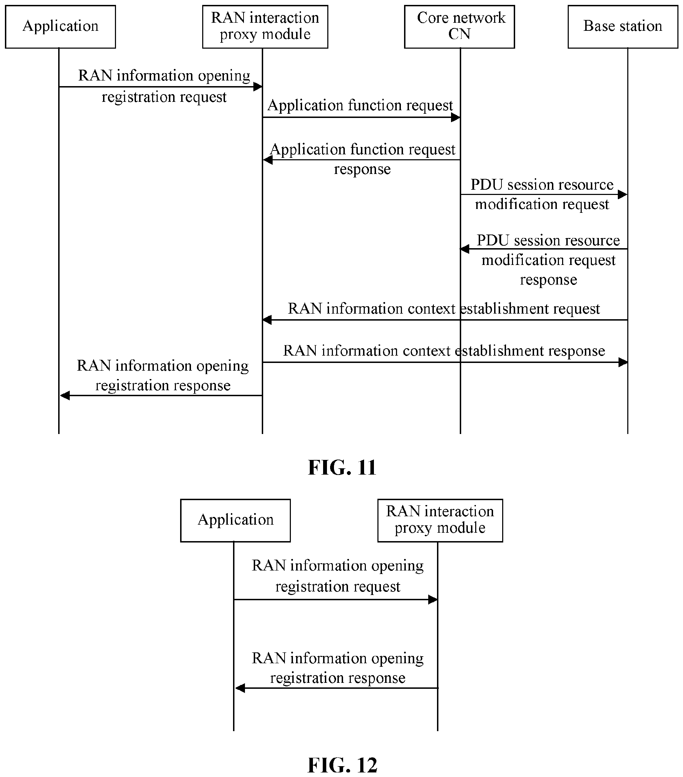

A terminal (UE) accesses a video application of an MEC host, and the application requires radio network information of the UE to optimize the service performance. Referring to FIG. 11, the application sends, through the 1 interface, a RAN information opening registration request to the RAN interaction proxy service on the MEC platform. The request message carries a UE identifier such as MSISDN, and the RAN information opening category content may be L3, L2 and Uu. The RAN interaction proxy service module receives the RAN information opening registration request sent by the video application through the 1 interface, records the MSISDN and the RAN information opening category of the UE, and allocates the MEC platform UE context identifier for the UE. Then, the RAN interaction proxy service module sends an application function request to the core network NEF through the 3 interface, and the request message content includes the MSISDN, DNN, S-NSAI, Data Network Access Identifier, application identifier, MEC platform identifier and MEC platform UE context identifier of the UE.

The NEF of the core network checks the parameters, and then sends an application function request response to the RAN interaction proxy service module through the 3 interface after the application function request is received, where the request response may indicate success or failure.

The NEF converts, by interacting with the UDM, the MSISDN of the UE into a 5G globally unique temporary UE identity (5G-GUTI) (corresponding to the aforementioned UE network identifier) of the UE identifier inside the core network. The NEF initiates a UE PDU session modification request through the PCF, converts the application identifier into a corresponding application flow identifier, and finally transmits information required in the application function request, such as the application flow identifier, the MEC platform identifier and the MEC platform UE context identifier, and the information is transmitted to the gNodeB of the RAN through PDU session resource modification request message sent by the AMF network element. Here, the gNodeB is one of the aforementioned access network elements.

The gNodeB sends a PDU session resource modification response to the AMF through the NG port, which indicates success.

The gNodeB of the RAN requests to receive a MEC platform UE context identifier, an MEC platform identifier and an application flow identifier through a PDU session resource modification request sent by the AMF. The gNodeB distributes the RAN information UE context identifier for the UE. The gNodeB sends a RAN information context establishment request to a RAN interaction proxy service module of the target MEC platform through the 2 interface, where the request content includes the MEC platform UE context identifier, a gNodeB identifier and the RAN information UE context identifier.

The RAN interaction proxy service module receives the RAN information context establishment request sent by the gNodeB through the 2 interface, a UE RAN information UE context identifier and the gNodeB identifier are correspondingly stored according to the MEC platform UE context identifier. The RAN interaction proxy service module sends a RAN information context establishment response to the gNodeB through the 2 interface, where the response message includes, but is not limited to, the RAN information UE context identifier and/or a RAN information opening type, and a type content is L3, L2 and Uu.

The RAN interaction proxy service module sends a RAN information opening registration response to the video application through the 1 interface. The message content includes the MSISDN and the MEC platform UE context identifier of the UE.

FIG. 12 shows the information interaction between the application and the RAN interaction proxy service module through the 1 interface, and the application may trigger the RAN interaction proxy service module to create a RAN information context channel with the RAN through the interaction of the RAN information opening registration request and the RAN information opening registration response.

### Example 3

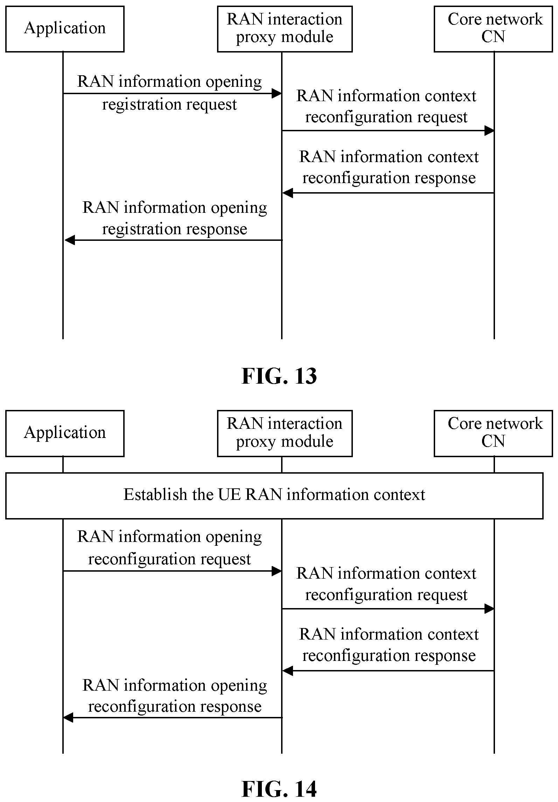

A terminal (UE) accesses a virtual reality (VR) application on the MEC host, and the VR application requires RAN information of the UE for performance optimization. As shown in FIG. 13, the application sends, through the 1 interface, a RAN information opening registration request to the RAN interaction proxy service on the MEC platform. The request message carries a UE IP address, a port number and a RAN information opening category, and a content of the request message is L3, L2 and Uu.

The RAN interaction proxy service module receives the RAN information opening registration request sent by a VR application through the 1 interface, records the IP address, the port number and the RAN information opening category of the UE, and it is found by comparison that the UE has registered RAN information opening and the corresponding RAN information opening category has become effective. When the RAN interaction proxy module finds that a currently received RAN information development category is different from the registered RAN information development category, the RAN interaction proxy module sends a RAN information context reconfiguration request to the access network element such as the CU, and if the CU is successfully configured, then the RAN interaction proxy module receives a RAN information context reconfiguration response returned by the CU. After a reconfiguration response is received, the RAN interaction proxy service module sends a RAN information opening registration response through the 1 interface, and the response content includes a success indication and an MEC platform UE context identifier.

### Example 4

A terminal (UE) accesses a VR application on the MEC host, and the VR application requires RAN information of the UE for optimization. As shown in FIG. 14, the application sends, through the 1 interface, a RAN information opening reconfiguration request to the RAN interaction proxy service on the MEC platform. The request message carries a UE IP address, and a RAN information opening category content is L3, L2, Uu and Xn.

The RAN interaction proxy service module receives a RAN information opening reconfiguration request sent by the VR application through the 1 interface, records the IP address and the RAN information opening category of the UE, and it is found by comparison that the UE has registered RAN information opening, but the RAN information opening category is different from the RAN information opened by the UE. The RAN interaction proxy service module sends a RAN information context reconfiguration request to the CU through the 2 interface, where the message content includes the RAN information UE context identifier and the RAN information opening category.

The CU receives the RAN information context reconfiguration request through the 2 interface to complete reconfiguration, and sends a RAN information context reconfiguration response to the RAN interaction proxy service module through the 2 interface, which indicates success.

The RAN interaction proxy service module sends a RAN information opening reconfiguration response to the VR application through the 1 interface, and the response content includes a success instruction and an MEC platform UE context identifier.

### Example 5

A terminal (UE) accesses an augmented reality application on the MEC host. The augmented reality application completes RAN information opening registration, and the category is L3, L2 and Uu.

The augmented reality application wants to reconfigure a current RAN information opening type to be L3, L2, L1, Uu. Therefore, the augmented reality application initiates a RAN information opening reconfiguration to the RAN interaction proxy service module through the 1 interface, and the message includes a MEC platform UE context identifier and a RAN information opening category, and the category content is L3, L2, L1 and Uu.

After the RAN information opening reconfiguration message of the augmented reality application is received by the RAN interaction proxy service module, the RAN interaction proxy service module sends a RAN information context reconfiguration request to the CU through the 2 interface. The message content includes, but is not limited to, a RAN information UE context identifier and a RAN information opening category, and the category content is L3, L2, L1 and Uu..

The CU receives the RAN information context reconfiguration request through the 2 interface to complete reconfiguration, and sends a RAN information context reconfiguration response to the RAN interaction proxy service module through the 2 interface, which indicates success.

The RAN interaction proxy service module receives a RAN information opening reconfiguration response sent by the application or the service through the 1 interface, and the response content includes, but is not limited to, success indication.

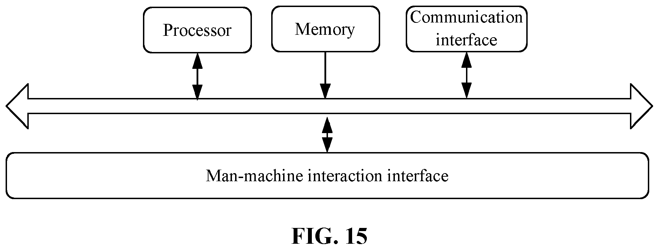

As shown in FIG. 15, this embodiment provides a network element. The network element includes a memory and a processor. The processor is connected to the memory, and the processor is configured to implement, through execution of computer executable instructions located on the memeory, the RAN information processing method provided by one or more of the foregoing technical schemes, such as, one or more of the RAN information processing methods shown in FIGs. 1 to 4 and FIGs. 11 to 14.

The memory may be various types of memory, such as a random access memory, a read only memory, a flash memory. The memory may be used for storing information, for example, storing computer-executable instructions. The computer-executable instructions may be various program instructions, such as an object program instruction and/or a source program instruction.

The processor may be various types of processors, such as a central processing unit, a microprocessor, a digital signal processor, a programmable array, a digital signal processor.

The processor may be connected to the memory via a bus. The bus may be an integrated circuit bus, or the like.

In some embodiments, the electronic equipment may further include a communication interface, and the communication interface may include a network interface, such as a local area network interface, a transceiver antenna. The communication interface is also connected to the processor and may be used for information sending and receiving.

In some embodiments, the electronic equipment further includes a man-machine interaction interface, and the man-machine interaction interface may include, for example, various input and output apparatuses, such as a keyboard, a touch screen.

The electronic equipment may be an ME host or a RAN interaction proxy service module in the MEC platform described above. In other embodiments, the apparatus may be an access network element such as a CU or a base station in a radio access network, or may be a core network element of a core network such as an AMF or a PCF in the core network.

This embodiment provides a computer storage medium. The computer storage medium has computer-executable instructions stored thereon. The computer-executable instructions, when executed, may implement the RAN information processing method provided by one or more of the foregoing technical schemes, for example, one or more of the RAN information processing methods shown in FIGs. 1 to 4 and FIGs. 11 to 14.

The computer storage medium may include various recording media having a recording function, such as a compact disk (CD), a floppy disk, a hard disk, a magnetic tape, a universal serial bus (USB) flash disk, a mobile hard disk. The optional computer storage medium may be a non-transitory storage medium, and the computer storage medium may be read by the processor, so that after computer executable instructions stored on a computer storage mechanism are acquired and executed by the processor, the information processing method provided by any one of the foregoing technical schemes may be implemented, for example, the information processing method applied to the terminal equipment or the information processing method applied to the server is performed.

In several embodiments provided by the present application, it should be understood that the disclosed apparatus and methods may be implemented in other ways. The device embodiments described above are merely illustrative, for example, a division of the units is a division of only one logical function, and there may be additional ways of division in actual implementation, for example multiple units or assemblies may be combined or integrated into another system, or some features may be omitted or not performed. In addition, the coupling, or direct coupling, or communicative connection of the various components shown or discussed may be indirect coupling or communicative connection through some interface, device, or unit, and may be electrical, mechanical, or other form of connection.

The units described above as separate components may or may not be physically separate, and the components shown as the units may or may not be physical units, i.e., may be located in one place or may be distributed over multiple network units; and part or all of the units may be selected according to actual needs to achieve the purpose of the scheme of this embodiment.

In addition, all functional units in all embodiments of the present application may be integrated into one processing module, or each unit may be independently used as one unit, or two or more units may be integrated into one unit; the integrated units may be achieved in a hardware form, and may also be achieved in a hardware and software functional unit form.

Those of ordinary skill in the art will appreciate that the implementation of all or part of the steps of the method embodiments described above may be accomplished by hardware associated with program instructions, the foregoing procedure may be stored in a computer readable storage medium, and the program, when executed, performs the steps including the method embodiments described above; the foregoing storage medium includes various media capable of storing program codes, such as a mobile storage device, a read-only memory (ROM), a random access memory (RAM), a magnetic disk, or an optical disk.

The above is only the implementation of the present application, but the protection scope of the present application is not limited thereto. It is easy for those skilled in the art to conceive modifications or substitutions within the technical scope disclosed by the present application. These modifications or substitutions are within the protection scope of the present application. Therefore, the protection scope of the present application should be determined by the protection scope of the appended claims.

## Claims

1. A radio access network, RAN, information processing method, applied in a mobile edge computing, MEC, platform, comprising:
sending a first request to a core network, wherein the first request carries a user equipment, UE, identifier and an MEC platform UE context identifier, wherein the UE identifier is used for triggering the core network to determine a UE network identifier, and the MEC platform UE context identifier is used for the core network to send the MEC platform UE context identifier to a radio access network;
receiving a first response sent by the core network, wherein the first response is based on the first request;
receiving a second request sent by the radio access network, wherein the second request comprises the MEC platform UE context identifier and a RAN information UE context identifier;
establishing a RAN information context channel of a UE based on the RAN information UE context identifier and the MEC platform UE context identifier; and
sending a second response to the radio access network.

2. The method of claim 1, further comprising: receiving a third request sent by an application or a service, wherein the third request comprises the UE identifier;
the sending the first request to the core network comprises: sending the first request to the core network according to the third request;
the method further comprises: returning a third response to the application or the service based on an establishment result of the RAN information context channel.

3. The method of claim 2, wherein the third request further comprises an opening parameter of RAN information.

4. The method of claim 3, wherein the opening parameter of the RAN information comprises a RAN information opening category.

5. The method of claim 4, wherein the RAN information opening category comprises at least one of a hierarchical category, an interface category, a cell category, a site category, or a service flow category.

6. The method of claim 5, wherein the hierarchical category comprises at least one of a layer 3 category, a layer 2 category, or a layer 1 category.

7. The method of claim 5 or 6, wherein the interface category comprises at least one of:
a first interface category, wherein a first interface indicated by the first interface category is an interface between the radio access network and the core network;
a second interface category, wherein a second interface indicated by the second interface category is an interface between different access network elements of the radio access network; or
a third interface category, wherein a third interface indicated by the third interface category is an interface between the radio access network and the UE.

8. The method of claim 2, wherein the third request is a RAN information opening registration request, and the third response is a RAN information opening registration response.

9. The method of claim 1, wherein the UE identifier comprises at least one of: a mobile subscriber international ISDN/PSTN number, MSISDN; an international mobile equipment identity, IMEI; an internet protocol, IP, address of the UE; or the IP address and a port number of the UE.

10. The method of claim 1, wherein the first request is an application service request, and the first response is an application service request response.

11. The method of claim 10, further comprising:
receiving a fourth request sent by an application or a service;
sending a fifth request to the radio access network according to the fourth request and the RAN information UE context identifier, wherein the fifth request is used for the radio access network to open RAN information for reconfiguration;
receiving a fifth response returned by the radio access network according to the fifth request; and
returning a fourth response to the application or the service according to the fifth response.

12. The method of claim 11, wherein an access network element of the radio access network comprises at least one of: a base station, or a centre unit, CU.

13. The method of claim 11 or 12, wherein a core network element of the core network comprises at least one of: a network exposure function, NEF, a policy control function, PCF, a network data analytics function, NWDAF, a unified data repository, UDR, or a unified data management, UDM.

14. The method of claim 1, wherein the method is applied in a RAN interaction proxy service module of the MEC platform.

15. A radio access network, RAN, information processing method, comprising:
receiving a first request sent by a mobile edge computing, MEC, platform, wherein the first request comprises a user equipment, UE, identifier and an MEC platform UE context identifier;
sending a first response to the MEC platform according to the first request;
sending a sixth request to a radio access network based on a UE network identifier determined according to the UE identifier, wherein the sixth request comprises the UE network identifier and
the MEC platform UE context identifier, and the sixth request is used for triggering the radio access network to determine a RAN information UE context identifier and establish a RAN information context channel; and
receiving a sixth response returned by the radio access network.

16. The method of claim 15, wherein the sending the sixth request to the radio access network based on the UE network identifier determined according to the UE identifier comprises:
sending a protocol data unit, PDU, session modification request to the radio access network based on the UE network identifier;
wherein receiving the sixth response returned by the radio access network comprises:
receiving a PDU session modification response returned by the radio access network.

17. A radio access network, RAN, information processing method, comprising:
receiving a sixth request sent by a core network, wherein the sixth request comprises a user equipment, UE, identifier and a mobile edge computing, MEC, platform UE context identifier;
sending a sixth response to the core network according to the sixth request;
sending a second request to an MEC platform according to a RAN information UE context identifier determined based on the sixth request, wherein the second request comprises the MEC platform UE context identifier and the RAN information UE context identifier; and the second request is used for the MEC platform to establish a RAN information context channel of a UE; and
receiving a second response returned by the MEC platform according to the second request.

18. The method of claim 17, wherein the first request further comprises an opening parameter of RAN information.

19. The method of claim 17 or 18, wherein the second response comprises an opening parameter of the RAN information.

20. The method of any one of claims 17 to 19, further comprising:
receiving a fifth request sent by the MEC platform, wherein the fifth request carries the RAN information UE context identifier, and is used for the radio access network to open the RAN information for reconfiguration; and
sending a fifth response to the MEC platform according to the fifth request.

21. A radio access network, RAN, information processing device, applied in a mobile edge computing, MEC, platform, comprising:
a first sending module, which is configured to send a first request to a core network, wherein the first request carries a user equipment, UE, identifier and an MEC platform UE context identifier,
wherein the UE identifier is used for triggering the core network to determine a UE network identifier, and the MEC platform UE context identifier is used for the core network to send the MEC platform UE context identifier to a radio access network;
a first receiving module, which is configured to receive a first response sent by the core network, wherein the first response is based on the first request;
a second receiving module, which is configured to receive a second request sent by the radio access network, and the second request comprises the MEC platform UE context identifier and a RAN information UE context identifier;
an establishing module, which is configured to establish a RAN information context channel of a UE based on the RAN information UE context identifier and the MEC platform UE context identifier; and
a second sending module, which is configured to send a second response to the radio access network.

22. A radio access network, RAN, information processing device, comprising:
a third receiving module, which is configured to receive a first request sent by a mobile edge computing, MEC, platform, wherein the first request comprises a user equipment, UE, identifier and an MEC platform UE context identifier;
a third sending module, which is configured to send a first response to the MEC platform according to the first request;
a fourth sending module, which is configured to send a sixth request to a radio access network based on a UE network identifier determined according to the UE identifier, wherein the sixth request comprises the UE network identifier and the MEC platform UE context identifier, and the sixth request is used for triggering the radio access network to determine a RAN information UE context identifier and establish a RAN information context channel; and
a fourth receiving module, which is configured to receive a sixth response returned by the radio access network.

23. A radio access network, RAN, information processing device, comprising:
a sixth receiving module, which is configured to receive a sixth request sent by a core network, wherein the sixth request comprises a user equipment, UE, identifier and a mobile edge computing, MEC, platform UE context identifier;
a sixth sending module, which is configured to send a sixth response to the core network according to the sixth request;
a seventh sending module, which is configured to send a second request to a MEC platform according to a RAN information UE context identifier determined based on the sixth request, wherein the second request comprises the MEC platform UE context identifier and the RAN information UE context identifier; and the second request is used for the MEC platform to establish a RAN information context channel of a UE; and
a seventh receiving module, which is configured to receive a second response returned by the MEC platform according to the second request.

24. A network element, comprising:
a transceiver,
a memory, and
a processor, which is respectively connected to the transceiver and the memory, is configured to control information sending and receiving of the transceiver and information storage of the memory through execution of computer executable instructions, to implement the method provided by any one of claims 1 to 14, 15 to 16, or 17 to 20.

25. A computer storage medium, storing computer executable instructions; wherein the computer executable instructions, when executed, implement the method provided by any one of claims 1 to 14, 15 to 16, or 17 to 20.
